# EUROPEAN PATENT SPECIFICATION

(11) **EP 2 949 533 B1**
(45) Date of publication and mention of the grant of the patent: **17.04.2019**
(21) Application number: 15397517.2
(22) Date of filing: 11.05.2015
(51) Int. Cl.: B60W 50/00, B60W 50/06, B60W 30/188, B60W 50/10

(54) **A METHOD FOR CONTROLLING THE PRIMARY MOTOR OF A LOAD TRANSPORTATION MACHINE, A CONTROL SYSTEM FOR THE PRIMARY MOTOR OF A LOAD TRANSPORTATION MACHINE, AND A LOAD TRANSPORTATION MACHINE**
VERFAHREN ZUR STEUERUNG DES PRIMÄREN MOTORS EINER LASTTRANSPORTMASCHINE, STEUERSYSTEM FÜR DEN PRIMÄREN MOTOR EINER LASTTRANSPORTMASCHINE UND LASTTRANSPORTMASCHINE
PROCEDE POUR COMMANDER LE MOTEUR PRIMAIRE D'UNE MACHINE DE TRANSPORT DE CHARGE, SYSTEME DE COMMANDE POUR LE MOTEUR PRIMAIRE D'UNE MACHINE DE TRANSPORT DE CHARGE ET MACHINE DE TRANSPORT DE CHARGE

(30) Priority: 28.05.2014 FI 20145490
(43) Date of publication of application: 02.12.2015
(73) Proprietor: John Deere Forestry Oy, 33100 Tampere (FI)
(72) Inventor: Kananoja, Teemu, 33480 Ylöjärvi (FI)
(74) Representative: Berggren Oy, Tampere

(56) References cited:
- EP-A2- 1 923 289
- DE-A1- 10 035 027
- US-A1- 2010 131 122
- US-A1- 2010 332 061
- US-A1- 2013 126 257

## Description

### Field of the invention

The invention relates to working machines and a method for optimizing the fuel consumption of a working machine. In particular, the invention relates to load transportation machines and a method for optimizing the fuel consumption of a load transportation machine. The invention relates particularly to a forwarder and a method for optimizing the fuel consumption of a forwarder. Furthermore, the invention relates to a control system of a primary motor. In particular, the invention relates to a load transportation machine, such as a forwarder, that comprises such a control system.

### Background of the invention

For example in the fields of construction, earth construction, agriculture, and forestry, various working machines are known, such as harvesters, forwarders, excavators, tractor excavators, combine harvesters, residue bundling machines, and fuel wood harvesters. The working machine typically comprises a movable frame machine, a space for carrying a load (load space), and at least one tool, such as loading and unloading means. Such a working machine, *i.e.* load transportation machine, can be used for transporting a load. The working machine comprises at least a primary motor for generating power for the frame machine and optionally for a tool or tools thereof. The primary motor is dimensioned so that the power supplied by it will be sufficient for any work situations that may come up.

Typically, the primary motor is controlled in the same way, irrespective of the use situation. Thus, a lot of fuel is consumed in situations in which only a small part of the power generated by the motor is needed for use.

US 2010/0131122 discloses a method for controlling a work machine during operation in a repeated work cycle. The method includes the steps of establishing a control strategy on the basis of at least one condition that varies between end positions of the work cycle, and controlling at least one device in a work machine power transmission system in response to the established control strategy. At least a part of the work cycle may be established on the basis of a magnitude of a detected operational parameter during operation.

US 2013/0126257 discloses a method for controlling a gear ratio rate of change in a machine having a continuously variable transmission. The method includes moving an operator input device to a changed position, receiving electronic data indicative of the changed position, and determining a non-limited desired gear ratio based at least in part on the changed position.

EP 1 923 289 discloses a method for damping vibration in a forest machine, in which a desired driving speed is maintained and reduced driving speed is automatically maintained when a wheel of the forest machine is descending from the top of an obstacle rising from the ground or to a recess in the ground. The forest machine comprises a drive transmission with several wheels, a control system arranged to maintain the desired driving speed of the forest machine and to control the drive transmission, wherein the control system is also arranged to automatically maintain the reduced driving speed when a wheel of the forest machine is descending from the top of an obstacle rising from the ground or to a recess in the ground.

### Brief summary of the invention

It is an aim of the present solution to reduce the fuel consumption of the primary motor of a load transportation machine. By reducing the fuel consumption, some other advantages are achieved as well, such as improved cost-effectiveness, enhanced environmental friendliness and reduced noise pollution. The aim is achieved by detecting a work step of the working machine that is of at least medium duration, and by setting at least one operating parameter of the primary motor in a corresponding way. Said work step of at least medium duration typically takes at least 2 minutes. The aim is achieved by controlling the primary motor of the load transportation machine according to the method to be presented.

An embodiment of the method is defined in claim 1.

A control system according to another aspect of the invention is defined in claim 11.

The control system can be configured in a load transportation machine, such as a forwarder, according to claim 13 or 14.

### Description of the drawings

- Figure 1: shows a load transportation machine which in the illustrated case is a forwarder, and
- Figure 2: shows a typical work cycle performed by the load transportation machine, comprising four work steps.

### Detailed description of the embodiments

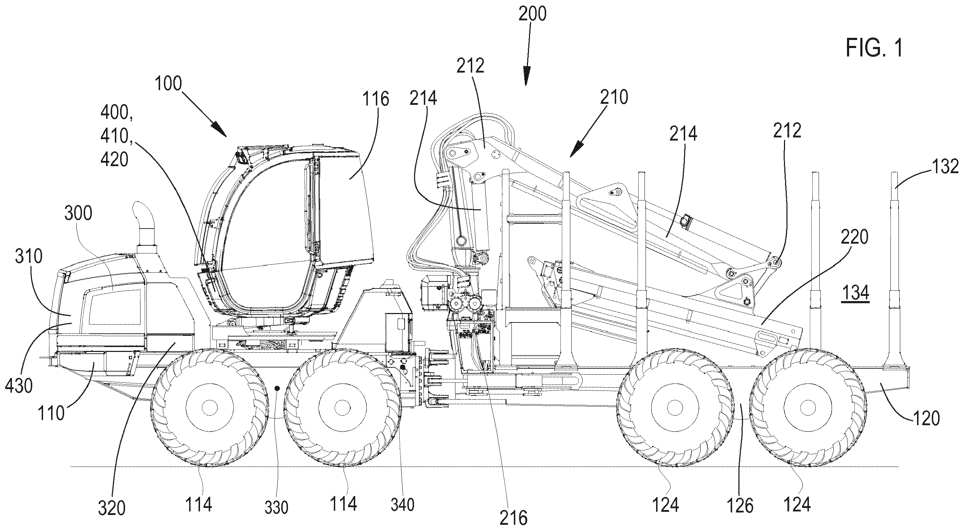

Figure 1 shows a load transportation machine 100. The load transportation machine 100 is suited, for example, to the needs of forestry, agriculture, construction, and/or earth construction. Forestry refers to the growing and utilization of wood, particularly the harvesting, *i.e.* collecting, of timber relating to the utilization. Agriculture refers to farming and animal husbandry, as well as corresponding utilization. Construction refers to the constructing of buildings and structures, particularly the construction industry, such as sectors of industry which make buildings and produce products and materials for construction. Earth construction refers to any earth moving, excavation, removal of undervegetation, and landscaping.

A load transportation machine 100 suitable for such a purpose is configured to be driven on the ground, both with and without a load. A load transportation machine without a load refers to an unloaded load transportation machine. In a corresponding manner, driving without a load refers to driving an unloaded load transportation machine. Furthermore, the load transportation machine 100 is configured to be driven at least off road. Typically, relatively heavy loads can be transported by such a load transportation machine. For example, the load transportation machine 100 can be configured to be driven on the ground off road, unloaded and loaded in an alternating manner, with a load whose mass can be at least 1000 kg.

The type of the load transportation machine 100 of Fig. 1 is a forwarder 100. The forwarder 100 comprises a front frame 110 and a rear frame 120. A primary motor 300 is arranged on the front frame 110. Furthermore, the front frame 110 comprises front wheels 114 and a cabin 116. The rear frame 120 is arranged movable and supported by a rear bogie 126. The rear bogie 126 comprises rear wheels 124. The rear frame 120 is equipped with vertical supports 132, whereby said frame 120 and the vertical supports 132 delimit a load space 134.

Moreover, the working machine 100 comprises a tool 200. In the example case of Fig. 1, the forwarder 100 comprises means 200 for loading and unloading the load space 134. These means 200, that is, the loading means 200, comprise, in the case of the forwarder, a crane arrangement 210 and a loading grapple 220. The crane arrangement 210 is mounted on the rear frame 120 in a swivelled manner by means of a support 216.

The load transportation machine 100 comprises a primary motor 300. The primary motor 300 is used for generating the driving power needed by the load transportation machine 100. Typically, the primary motor 300 is used for generating driving pressure in a first hydrostatic medium, to be utilized in a hydraulic motor for driving the load transportation machine, and for generating operating pressure in a second hydrostatic medium, to be utilized in a tool 200. The primary motor 300 is typically a combustion engine, such as a diesel engine. The primary motor 300 is dimensioned so that the power supplied by it will be sufficient for any work situations that may come up. Naturally, it is possible to generate the driving power for the load transportation machine directly by the primary motor 300. In an embodiment, the primary motor 300 is a diesel engine, such as a compressed air diesel engine.

The load transportation machine 100 may also comprise a secondary motor 330 of the type of a hydraulic motor, and a hydrostatic pump 320 for pressurizing a pressure medium, whereby said hydrostatic pump 320 is configured as a power source for the secondary motor 330, and the secondary motor 330 is configured to generate the power needed for driving the load transportation machine 100. For example, the load transportation machine 100 may further comprise a control unit for the primary motor, and a control system for the primary motor.

As presented above, a forwarder is a type of a load transportation machine 100. Other load transportation machines commonly used for forest work include a bundling machine for bundling and transportation of residue; a skidder for skidding felled, undebarked trees out of a forest to the side of a road; a tractor excavator for excavation work and for transportation of material in a bucket; and a fuelwood harvester in the case where the fuelwood harvester also comprises means for transporting the load (fuelwood).

Another load transportation machine commonly used off road, namely in the field, is a combine harvester. Yet another load transportation machine typically used off road, namely on a construction site or in a mine, is a dumper.

The power demand of a load transportation machine 100 configured to be driven particularly off road may vary to a great extent. It is well known that there are obstacles, such as depressions, pits, ditches, elevations, hummocks, fallen tree trunks, rocks, stumps, and the like in such terrain, for example in a forest. For overcoming the obstacles and for changes in the loading, the drive transmission has to supply sufficient power, and moreover, the power has to be available quickly so that the load transportation machine 100 does not stop or its speed does not drop unnecessarily. In case the load transportation machine transports various loads off road, the loading and the power demand may be higher than normal, and their variation may be greater than normal. On the other hand, if the load transportation machine is driven without a load, the loading and the power demand may be lower than normal.

In order to understand the embodiments of the invention, it is essential to notice that a given power level of the primary motor 300 of the load transportation machine 100, for example 50% of the maximum power given for the primary motor 300, can be generated in modern electronically controlled motors with various efficiencies by selecting the control parameters of the motor in different ways. Put in other words, the fuel consumption of the primary motor 300 is different with different control parameters, even if the same 50% partial power were output from the primary motor in all such cases. Inversely, the power output readiness of the primary motor 300 is also different with different values of the control parameters. In this context, the power output readiness refers, first of all, to the maximum power output from the primary motor with said values of the control parameters, but also to the speed of response by the primary motor in the case of a sudden change in the power demand. The latter is commonly called peppiness of the engine.

As a result, the control parameters of the primary motor of the load transportation machine can be optimized on the basis of the work step in such a way that the primary motor will generate sufficient power for each work step in an economical way without maintaining an excessive readiness for power output, which would have the drawback of a distinct reduction in efficiency. Furthermore, because the power demand is evaluated on the basis of a work step of a relatively long duration, it will not be necessary to change the control of the load transportation machine 100 and/or the primary motor 300 frequently. By detecting the work step and controlling the primary motor on the basis of it, it is possible to prepare, for each work step, to meet the loading demand of only such a level that is specific to the work step. For example, maintaining peppiness that is excessive with respect to the work step will consume more fuel than peppiness based on the work step, because the primary motor will then respond to even a slight increase in the loading level by supplying an unnecessarily large amount of fuel and by adjusting the turbocharger and other actuators respectively, for the loading. For example, maintaining too high a rotation speed for the work step will consume more fuel than a rotation speed based on the work step, because the primary motor will continuously run on a high speed, whereby the fuel consumption of the primary motor will increase.

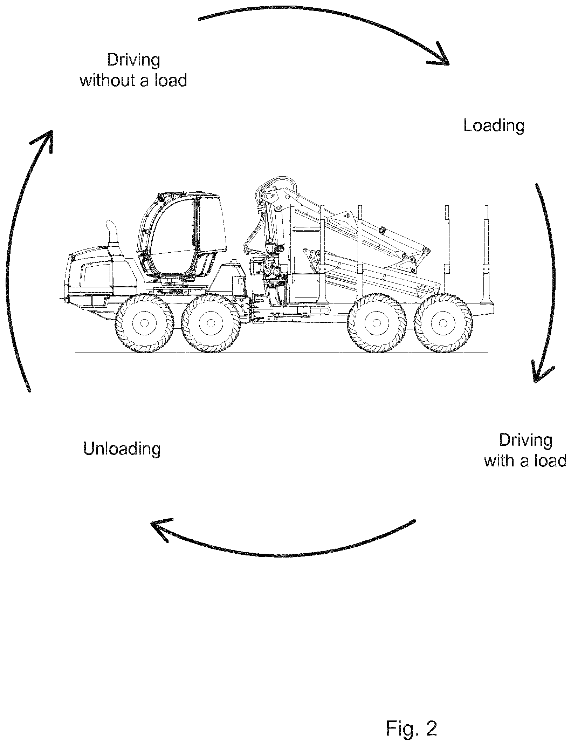

It has been found that a work step of a typically long duration can be detected in the normal operation of the load transportation machine. With reference to Fig. 2, the work typically comprises successive cycles of work steps. Each cycle, in turn, comprises possible work steps. For example, the following work steps can be distinguished in the cycle of Fig. 2: Loading, Driving with a load, Unloading, and Driving without a load. The temporal transitions between these cycles take place according to the arrows shown in Fig. 2. Driving without a load is followed by loading again, as shown in Fig. 2. For example, timber is loaded onto the forwarder in a forest. After collecting a sufficient amount of timber, the loaded forwarder is driven to the side of a road where it is unloaded. After the unloading, the forwarder is driven (without a load) back to the forest, to fetch another load of timber. Detecting the work step refers to selecting the work step being carried out from a set of possible work steps. Detecting the work step, *i.e.* selecting it from a set of possible work steps, in turn, is performed in a way to be described below.

The power demand is influenced to a great extent by the fact whether the load transporting machine 100 is driven with or without a load. Therefore, said work step can be selected from at least two work steps: driving without a load and driving with a load. When driving without a load, the power demand is relatively low. Correspondingly, when driving with a load, particularly off road, such as in a forest or on a field, the power demand is high. Thus, said work step "Driving without a load" can relate to driving without a load (*i.e.* unloaded) off road, and said work step "Driving with a load" can relate to driving with a load off road.

It has been found that by controlling the primary motor of the load transportation machine 100 on the basis of the ongoing work step, it is possible to improve the economy of the load transportation machine, that is, the performance per fuel quantity used, that can be achieved with the load transportation machine. In other words, it is possible to reduce the fuel consumption for the same performance. This is based on the fact that the primary motor can be controlled by utilizing information about the work step and the loads typically caused by said work step on the load transportation machine. This reduces the operating costs of the machine, but in addition, particularly emissions into the environment and noise caused by the load transportation machine are also clearly reduced. This is important as well, because in respect of the whole life cycle of the load transportation machine, a large part of the environmental load caused by the load transportation machine is caused by emissions from the primary motor, such as a diesel engine.

Typically, the primary motor 300 comprises or is equipped with an electronic control unit (ECU) 310 whose parameters can be changed to influence the operation and the fuel consumption of the primary motor 300. Furthermore, by controlling the operation of the other parts of the working machine 100, it is possible to influence the fuel consumption as will be described below.

Above, the term "work step" was presented. This refers to a step of work to be performed by the load transportation machine 100 and having a duration of typically at least two minutes, for example at least 5 minutes. For example, the same work step can go on for at least 10 minutes. Said typical duration refers to a typical duration of said work step in time. The typical duration in time can be, for example a statistical measure for the duration of the work step, such as an expected duration of the work step in time. Thus, the work step can be expected to go on for the above mentioned time. The term "expected" refers to an average duration of said work step in time. For example, if the work step is "driving without a load", such a work step takes a time that varies according to the destination, and an expected value can be determined for the varying time by known statistical methods. Thus, said work step is expected to go on for the time of exactly said expected value. Examples on minimum times for this expected value have been given above. Alternatively, the "typical" duration can refer to, for example, a median value for the duration of the work step.

The term "work step" also refers to a work step which is detected in the method. The work step can be detected from a set of possible work steps. It is obvious that each possible work step may involve a duration in time that is typical of that particular work step, for example an expected one. In an embodiment, the duration of at least one work step from a set of possible work steps is typically, for example is expected to be, the above mentioned time. In an embodiment, the duration of each work step from a set of possible work steps is typically, for example is expected to be, the above mentioned time.

The term "work step" refers to, for example, the work step that is going on at the time when said work step is being detected. Because the work step is expected to take some time, it has been found that the most significant savings in the fuel consumption may be achieved by detecting the work step of the load transportation machine 100 at the time. Greater savings cannot necessarily be achieved by, for example, anticipating the work step. Moreover, it may be easier to detect an ongoing work step than to anticipate a work step. Referring to Fig. 2, when the load transportation machine is configured to perform successive work cycles, each work step may be detected at least once during one work cycle. For example in the case of recurrent work cycles according to Fig. 2, if the set of possible work steps only comprises the steps "Driving without a load" and Driving with a load" (see Table 2), it may only be possible to detect the step "Driving without a load" once, and the step "Driving with a load" once, during a work cycle. For example in the case of repeating work cycles according to Fig. 2, if the set of possible work steps only comprises the steps "Driving without a load", "Driving with a load" and "Changing the load quantity" (see Table 3), it is possible to detect the step "Driving without a load" once, the step "Driving with a load" once, and the step "Changing the load quantity" twice during each work cycle. For example in the case of repeating work cycles according to Fig. 2, if the set of possible work steps comprises the steps "Driving without a load", "Loading", "Driving with a load", and "Unloading" (see Table 4), each step can be detected exactly once during each work cycle.

In an embodiment, the load transportation machine 100 is configured to perform different work steps during successive work cycles, wherein such a set of possible work steps is used that each possible work step will be detected at least once during each work cycle.

Naturally, during an even longer period of time, such as an entire working day, several work cycles may be performed, or at least one work cycle. Also during such a long period of time, each possible work step may be performed. Thus, in the method, such a set of possible work steps may be used that each work step from a set of possible work steps will be detected at least once during a typical working day.

It is, of course, possible that the set of possible work steps also comprises such work steps that are performed very rarely. Such a work step is not necessarily performed during even a long period of time. An example could be a work step in which a tool 200 is used for repairing the same load transportation machine 100. The term "possible work step" covers the meaning that the work step is possible; in other words, such a work step can be performed by the load transportation machine during its service life.

In an embodiment, said set of possible work steps comprises at least the steps "driving without a load off road in a forest" and "driving with a load off road in a forest ".

One such embodiment is illustrated in Table 1.

**Table 1 A set of possible work steps, a controllable unit, control parameters to be used, and value of the control parameters to be used in an embodiment.**

| **Unit to be controlled** | **Control parameter** | **Work step:** | **Work step:** |
|---|---|---|---|
| | | Driving without a load | Driving with a load |
| Primary motor | Peppiness | Low | Aggressive |
| Primary motor | Rotation speed | Low | High |

According to Table 1, the method can be used for controlling, for example, the rotation speed (rotations per minute, rpm) of the primary motor 300 by means of the detected work step. The rotation speed can be selected to be low when driving without a load, and high when driving with a load. When driving with a load, the power demand of the load transportation machine 100 may be high, so that the rotation speed should be set high. Correspondingly, when driving without a load, fuel can be saved by using a lower rotation speed. In this way, the economy (in the sense of performance per fuel unit used) may be improved.

In addition or alternatively, according to Table 1, the method can be used for controlling, for example, the peppiness of the primary motor 300 by means of the detected work step. The peppiness can be selected to be low when driving without a load, and high when driving with a load. The peppiness relates to the motor's way of responding to an abrupt change in the loading of the motor. When the peppiness is aggressive, the primary motor 300 will respond more quickly to the change in the power demand compared to a situation when the peppiness is low. When driving with a load, particularly off road, the power demand may vary quickly, due to firstly the load and secondly obstacles, such as pits, rocks and/or stubs, so that the peppiness should be set aggressive. Correspondingly, when driving without a load, fuel can be saved by lower peppiness, whereby the economy (*i.e.* the performance per fuel unit used) is improved.

Said work step can be detected by at least one of the following:
- normal control movements by the driver of the load transportation machine 100, for controlling the work or the progressive movement of the load transportation machine 100, the number of the control movements being at least two; and/or
- a sensor or sensors which is or are configured to provide information about (a) the quantity of the load in the load space 134 of the load transportation machine 100, and/or (b) the quantity of the load in a tool 200, and/or (c) the speed of the load transportation machine 100.

The above mentioned "normal control movement for controlling the work" can be, for example, one of the following:
- A control movement for manipulating a tool 200 of the load transportation machine 100, such as manipulating a crane arrangement 210.
- A steering movement for moving the cabin 116 of the load transportation machine 100. Such a steering movement makes, for example, the cabin 116 swivel in relation to the front frame 110.

In particular, the work step can be detected on the basis of the control movements for controlling the manipulation of the crane arrangement 210; at least two such movements.

The above mentioned "normal control movement for controlling the progressive movement of the load transportation machine" can be, for example, one of the following:
- Turning the steering wheel.
- Pressing the accelerator pedal.
- Manipulating the driving gear.

Some load transportation machines may be equipped with a power reduction switch; turning this is not regarded as the above mentioned normal control movement for controlling the work. In particular, the mass of such a switch is typically small compared with said load transportation machine or a component thereof.

In an embodiment, the work step of the load transportation machine is detected on the basis of a first control movement and a second control movement by the driver of the load transportation machine, which first and second control movements are, each alone, used for moving the load transportation machine or a part thereof, the part to be moved having a mass (*i.e.* weight) of at least 10 kg.

In particular, the work step can be detected on the basis of the first control movement, by which a tool 200, for example the crane arrangement 210 of a forwarder, is moved, and the second control movement, by which a tool, for example the crane arrangement 210 of the forwarder, is moved.

The above presented "first control movement" refers to the first control movement in a series of a control functions; not, for example, the first control movement in a day or in the whole work history of the machine.

For detecting the work step, in addition to the first control movement, at least one other control movement is utilized, optionally also at the same time.

In an embodiment, the work step of the load transportation machine is detected on the basis of, not only the first control movement but also the second control movement by the driver. For example, the first control movement can be the manipulation of the crane, and the second control movement can be applying the driving pedal (gas). It is thus possible to conclude that the work step has been changed from loading or unloading to driving. It is also possible that the driving pedal is applied slightly when loading and simultaneously driving slowly. Thus, the second control movement can be pressing the driving pedal past a given limit, such as all the way down. Furthermore, as will be described hereinbelow, it is possible to utilize, for example, the speed of the load transportation machine 100, measured by a sensor, for determining the work step.

For example, the first control movement can be utilized by recording a first time taken for the first control movement; receiving reference data containing data on the typical duration of the first control movement in each work step, wherein the work step specific data relates to each work step belonging to a set of possible work steps; comparing the first time with said reference data; and detecting the work step of the load transportation machine on the basis of said comparisons.

For example, the reference data can comprise the information that when the work step is unloading, bringing the (empty) loading grapple 220 into the load space 134 typically takes 5 to 10 s, and that when the work step is loading, bringing the (full) loading grapple 220 into the load space 134 typically takes 10 to 20 s. Thus, if the first control movement is bringing the loading grapple into the load space and this control movement has taken, for example, 8 s, it can be concluded that the work step is more probably unloading than loading.

Furthermore, a later control movement, *i.e.* said second control movement, is utilized in determining the work step. The time taken for the second control movement can be utilized as well. For example, the first control movement and the second control movement can be utilized by recording the first time taken for said first control movement; recording the second time taken for said second control movement; receiving reference data containing data on the typical duration of the first control movement and on the typical duration of the second control movement in each work step, wherein the work step specific data relates to each work step belonging to a set of possible work steps; comparing the first time with said reference data; comparing the second time with said reference data; and detecting the work step of the load transportation machine on the basis of said comparisons.

In an embodiment, in addition to the first and second control movements, the work step of the load transportation machine is also detected on the basis of a third control movement, which third control movement is used to move the load transportation machine or a part thereof, the movable part having a weight (*i.e.* mass) of, for example, at least 10 kg, and/or on the basis of the time from said second control movement by the driver and/or the time between said second control movement and said first control movement, and/or the time taken for said third control movement, if the third control movement was detected.

An example of a third control movement by the driver is a situation in which the first control movement (*e.g.* with a control stick) is made for bringing the loading grapple 220 into the load space 134 in such a way that the loading grapple 220 is closed. With the second control movement (*e.g.* with a control stick), the loading grapple 220 is brought from the load space 134 in the open position. With the third control movement (*e.g.* applying the accelerator pedal), the load transportation machine 100 is driven a short distance. It can thus be concluded that the load transportation machine is being loaded; that is, it can be concluded that the work step is "Loading".

The third control movement can be utilized by recording, in addition to said first time and second time, the third time taken for the third control movement; receiving reference data containing data on the typical duration of the third control movement in each work step, wherein the work step specific data relates to each work step belonging to a set of possible work steps; comparing the third time with said reference data; and detecting the work step of the load transportation machine on the basis of said comparisons.

The time taken for the first and/or second control movement does not necessarily depend on the work step. For example, the duration of the control movement to open the loading grapple 220 may be independent of the work step. Thus, said first or second time is not necessarily utilized. As an alternative or in addition to utilizing said first time, and optionally the second and/or third time, it is possible to utilize the first and second control movements by recording the time difference between said first control movement and said second control movement; receiving reference data that contains data on the typical time difference between the first control movement and the second control movement in each work step, wherein the work step specific data relates to each work step that belongs to a set of possible work steps; comparing the time difference with said reference data; and detecting the work step of the load transportation machine on the basis of said comparisons.

Furthermore, it is possible to detect the work step on the basis of several control movements by the driver for manipulating the load transportation machine or its parts, such as the crane arrangement 210. Alternatively, the times between these control movements and/or the time from the latest control movement can also be utilized in detecting the work step.

In particular, it is possible to monitor, for example, the operation of the crane arrangement 210, such as the movement times of the joints 212 and/or booms 214 of the crane arrangement 210.

Alternatively or in addition, a sensor or sensors can be used for detecting the work step. In an embodiment, the work step of the load transportation machine 100 is detected by only at least one sensor (that is, without using said control movements for the detection), such as a sensor (or sensors) arranged to provide information about (a) the quantity of the load of the load transportation machine 100, and/or the quantity of the load of the tool 200, and/or (c) the speed of the load transportation machine 100.

In an embodiment, the work step of the load transportation machine is also detected by at least one sensor (that is, by using said control movements for the detection), such as a sensor (or sensors) arranged to provide information about (a) the quantity of the load of the load transportation machine 100, and/or the quantity of the load of the tool 200, and/or (c) the speed of the load transportation machine.

The sensor can be arranged to measure the mass of the load, wherein the sensor is configured to provide information about the quantity of the load in the load transportation machine 100, for example in its load space 134. The sensor can be arranged in the rear frame 120. The sensor can be, for example, a strain gauge. Such a sensor can measure the mass of the whole load or the whole load transportation machine.

The sensor can be configured to measure the volume or the height of the load, indicating the quantity of the load. The sensor can be, for example, an optical sensor for measuring the quantity of the load in the load space 134.

In addition or alternatively, load scales can be used, if available in the load transportation machine. The load scales refer to scales connected to the crane arrangement 210, for determining the mass of a partial load, such as a tree trunk, being handled by the loading grapple 220 at a time. The load scales can be arranged, for example, at the fixing point of the loading grapple 220 and the crane arrangement 210 (see Fig. 1). The load scales are configured to measure the mass of the goods in the loading grapple 220.

In addition or alternatively, it is possible to use said sensor or a sensor for measuring the speed of the load transportation machine 100. When the speed exceeds a threshold value, the work step can be concluded to be driving (with or without a load). Loading can be performed, for example, at a speed that is low but greater than zero. Alternatively, during the loading, the load transportation machine can be driven short distances between the loading of single partial loads, such as tree trunks. Unloading is typically performed when the load transportation machine stands still, wherein the speed is zero.

In particular, the work step of the load transportation machine can be detected repeatedly by utilizing said control movements and/or time and/or data on the load provided by a sensor or sensors. For example, the work step can be detected to be the same as the previously detected work step, wherein the value of a control parameter for the primary motor 300 of the load transportation machine 100, relating to said work step, has already been determined earlier. The work step can be detected to be different from a previously detected work step (that is, a new work step), wherein the value of a control parameter for the primary motor 300 of the load transportation machine 100, relating to said work step, can be determined by utilizing the detected new work step.

Such recurrent detecting can be implemented, for example, by continuously collecting measurement data on the control movements by the driver and/or the sensors for detecting the speed or the load quantity as described above. The work step can be concluded on the basis of these measurements. In particular, it is possible to continuously monitor the operation of the crane arrangement 210 of the load transportation machine, for concluding the work step at any given moment of time.

With respect to the driver's operation, the control movements by the driver are monitored, which set on operations of the load transportation machine. Furthermore, measured variables relating to the speed or position of the load transportation machine and/or a part thereof, provided by the system, can be taken into account. The work step can be concluded, for example, by measuring the times of different operations and the state transitions between the operations, and alternatively, the quantity of loading, and by detecting the present work step on the basis of these measurements.

For example in the case of a forwarder, in an embodiment, the operating times of the joints 212 and/or booms 214 of the crane arrangement 210 are measured for each operation. The measured time is compared in the above described way with reference values which are typically known to apply for different operations in different work steps. In this way, it is possible to conclude the ongoing operation and further the work step.

For determining the work step to be loading, one or more of the following operations can be detected:
- bringing the empty grapple to a stack,
- transferring logs on the ground,
- picking up a load,
- bringing the load into the load space,
- placing the load,
- arranging logs in the load space,
- a break, and
- other work.

For determining the work step to be unloading, one or more of the following operations can be detected:
- picking up a load from the load space,
- bringing the load to a stack,
- placing the load,
- arranging the stack,
- bringing the grapple into the load space,
- a break, and
- other work.

By means of the method, it is also possible, by utilizing the detected work step, to select suitable parameter values for, for example, at least one of the following:
- the drive transmission of the load transportation machine from a motor (such as the primary motor or a secondary motor) to a traction wheel (or other means for driving the load transportation machine); for example a gear 340 or a reduction gear 340; Table 2: "power transmission",
- secondary motor 330,
- a hydrostatic pump 320 for operating the hydraulic secondary motor 330, for example the angle of the blade of such a pump; Table 2; "hydrostatic pump", and
- anticipation of the power demand of the control system of the load transportation machine; Table 2: "control system"

These alternatives are illustrated in Table 2.

**Table 2. An example of units controlled by means of a detected work step, control parameters to be used, and suitable values for the control parameters relating to different work steps, in the case of two different work steps.**

| **Unit to be controlled** | **Control parameter** | **Work step:** | **Work step:** |
|---|---|---|---|
| | | Driving without a load | Driving with a load |
| Primary motor | Peppiness | Low | Aggressive |
| Primary motor | Rotation speed | Low | High |
| Power transmission | Driving speed (Gear status) | High speed | Low speed |
| Hydrostatic pump | Pressure manipulation | On | Off |
| Control system | Anticipation of power demand | Off | On |

The forwarder 100 may comprise a closed loop hydraulic circuit, in which pressurized pressure medium is circulated for producing driving power for the secondary motor 330. The forwarder 100 can also comprise a tool 200, *i.e.* a crane arrangement 210 and a loading grapple 220 arranged to be driven by another pressure medium.

Thus, the forwarder can comprise a second hydrostatic pump for pressurizing the second pressure medium for the tool 200, wherein said second hydrostatic pump is configured as the power source for said tool 200, and said primary motor 300 is configured to drive the second hydrostatic pump for pressurizing the second pressure medium and thereby powering the tool 200. In some embodiments, it is possible that the primary motor 300 directly produces the power needed for driving the load transportation machine 100, and the secondary motor 330 is configured to power the tool 200 without producing driving power to the load transportation machine 100. The secondary motor 330 can be, for example, an electric motor powered by the control unit of the secondary motor which, in turn, may be supplied with electricity from a battery. In a corresponding manner, the primary motor 300 is arranged to charge the battery by means of a charger. Thus, the control unit of the secondary motor is configured to supply the secondary motor with electric power (current and/or voltage) according to the use.

In some embodiments, it is possible that the primary motor 300 generates hydrostatic power by means of a hydrostatic pump 320 for a number of apparatuses, such as the hydraulic motor 330 for driving the load transportation machine 100, and the tool 200, particularly several parts thereof, for applying the tool.

As presented in Table 2 above, the drive transmission from the motor (primary motor 300 or secondary motor 330) to the wheels 114, 124 can also be controlled in order to enhance the economy of the load transportation machine. In general, the load transportation machine 100 comprises
- means, such as a wheel 114, 124 or a roller, for driving the load transportation machine (below, driving means), and
- means, such as a gear 340, for power transmission from the motor (300, 330) to the means for driving the load transportation machine (below, drive transmission means).

The complex of a hydrostatic pump 320, a hydraulic motor 330, and the drive transmission means 340 of load transportation machine 100 that comprises a hydraulic secondary motor 330 for driving the load transportation machine 100, is commonly called an HST system (HST, hydrostatic transmission). The HST system is used for generating the required power for driving a heavy duty vehicle and providing continuous speed control and a high torque. In addition to the above-mentioned control of the primary motor 300, the HST system can be controlled to improve the economy of the load transportation machine 100.

The efficiency of the HST system will depend on the rotating speeds, volume flow and pressure of the components (particularly 320, 330). The efficiency of the components is often better at a nominal pressure than at pressures lower than that. Thus, the rotational volume of the hydrostatic pump 320 and the hydraulic motor can be adjusted within certain pressure limits to achieve an optimal torque of the hydraulic motor 330 with all speed ratios. This can be achieved by controlling, for example, the rotational volume of the hydrostatic pump 320 and/or the hydraulic motor 330. The rotational volume can be controlled by adjusting the angle of the blade of the actuator (pump 320 or motor 330). The economy of the load transportation machine can be improved by controlling these on the basis of the work step.

Furthermore, in HST systems, the driving speed can be controlled by aiming at a desired speed ratio (for example, Gear ratio value). The driving speed can be controlled, for example, by directly controlling the secondary motor 330, but more typically, by means of a driving gear 340 or a reduction gear 340. The driving speed can also be controlled on the basis of the work step to improve the economy of the load transportation machine 100.

In some solutions, the hydraulic components are dimensioned to operate at a high efficiency when the maximum power and the maximum torque prevail. Thus, the efficiency of the HST system is not optimal in a low loading range. In an embodiment of the present solution, the efficiency of the HST system is also optimized by means of the detected work step.

In controlling the HST system, at least one of the following is controlled: the hydrostatic pump 320, the secondary motor 330, the driving gear, and the reduction gear 340.

The drive transmission means can transmit power from the secondary motor 330 to the driving means. Thus, the hydrostatic pump 320 transmits power from the primary motor 100 to the secondary motor. The drive transmission means can transmit power from the primary motor 300 to the driving means.

In addition to said gear 340, the drive transmission means typically comprise, *e.g.* a cardan shaft for transmitting driving power from the front part to the rear part of the load transporting machine, and a differential shaft for transferring driving power from the cardan shaft to the wheels 124. Typically, the drive transmission means can be controlled by the control system of the load transportation machine. In the control of the drive transmission, a parameter, a table, a rule, or a computing algorithm is utilized, which determines a suitable control value, such as a gear or reduction gear to be used, on the basis of the detected work step, optionally by taking into account the control parameters of the primary motor and/or a short-term operation and/or a change in the power demand.

In an embodiment in which the load transportation machine further comprises a secondary motor 330, at least one value is also selected for the parameter for controlling the operation of the secondary motor 330 of the load transportation machine, by utilizing the detected work step, and the secondary motor 330, or the power source of the secondary motor 330, of the load transportation machine is controlled by means of said value of the parameter controlling the operation of the secondary motor.

The power source of the secondary motor 330 of the load transportation machine can be, for example, said hydrostatic pump 320. With reference to Table 2, the operation of the secondary motor of the load transportation machine can be controlled, for example, by controlling the hydrostatic pump 320 configured to supply driving power. The control parameter of the hydrostatic pump 320 can indicate, for example, whether the manipulation of the hydrostatic pressure produced by the hydrostatic pump 320 is on or off. By manipulating (increasing or decreasing; preferably increasing) this pressure, *i.e.* the hydrostatic pressure used for the drive transmission, it is possible to influence the operation of the secondary motor 330 that produces driving power. When driving with a load, the manipulation is off, because maximum power is needed for driving. When driving without a load, the manipulation is on, because it has been found that by manipulating the pressure, it is possible to improve the efficiency of the hydraulic driving system, since the efficiency of the HST system is dependent, in the above described way, on the rotation speeds, volume flow and pressure of the components.

Further with reference to Table 2 and the above disclosure on the efficiency of the HST system, it is also possible to control the drive transmission means, such as the reduction gear 340, in addition to the primary motor 300 (and optionally the use of the secondary motor 330). Typically, particularly off road, the load transportation machine 100 is driven at full speed (*i.e.,* with the accelerator pedal of the motor pressed down; with the foot down), and the suitable full speed is selected by the drive transmission means (the gear and/or reduction gear). In the presented method, the suitable gear can be selected on the basis of the detected work step, wherein the user can, if desired, always drive the load transportation machine with the foot down.

In such an embodiment, control parameters for the means of the load transportation machine 100 are also selected for power transmission from the motor to the means for driving the load transportation machine (the drive transmission means), and the drive transmission means (the means for transmitting power from the motor to the means for driving the load transportation machine) are controlled.

With reference to Table 2, when driving without a load, the drive transmission means can be set to a state in which the driving speed is high. For example, the gearing can be set to a high gear. For example, the above-mentioned angle of the hydraulic drive motor can be adjusted so that the driving speed will be high. In a corresponding way, when driving with a load, the drive transmission means can be set to a state in which the driving speed is low. For example, the gearing can be set to a low gear. In this way, sufficient power for driving the load transportation machine 100 is secured even when loaded.

The primary motor 300 of the forwarder 100, and optionally at least one of the drive gear 340, the reduction gear 340, the hydraulic secondary motor 330, and the hydrostatic pump 320, can be controlled in the above described way, with reference to Tables 2 to 4.

In addition to the optimal use of the HST system, or as an alternative to it (but in addition to controlling the primary motor), the economy of the load transportation machine 100 can be improved by affecting the control system of the load transportation machine 100.

Further with reference to Table 2, the control system of the load transportation machine 100 can optionally anticipate the power demand of the primary motor 300 and/or the secondary motor 330. For example, if the power demand of the load transportation machine 100 increases as a result of a surprising obstacle, the control system may increase the power of the primary motor 300. The above mentioned peppiness of the motor (see, for example, Table 1) indicates the response of the primary motor 300 to changes in the power demand. However, by changing merely the peppiness, it is not necessarily possible to respond sufficiently to very big changes in the power demand which may come up when driving over obstacles, with a load. Instead, by automatically detecting the power demand already in the control system, it is possible to anticipate a greater change in the loading. Thus, a sufficient output of the primary motor can be provided even if the power demand varies to a significant extent. For this reason, anticipation of the power demand is set on when driving with a load.

The power demand can be detected, for example, by a pressure sensor configured to measure the pressure of the pressure medium in the hydraulic circuit of said drive transmission. The power demand can be detected by a rotation speed sensor configured to detect the rotation speed of the motor, such as the secondary motor 330.

Correspondingly, when driving without a load, there is typically less variation in the loading, whereby there is no need to anticipate the power demand. Because the anticipation typically increases the fuel consumption to some extent, anticipation of the power demand can be set off in situations where this is reasonable in terms of the operation, as presented in Table 2.

Accordingly, in a corresponding embodiment, the load transportation machine 100 also comprises means, such as a pressure sensor and/or a rotation speed sensor, for detecting the power demand of the motor, such as the primary motor 300 or the secondary motor 330. At least when controlling the primary motor 300, a value for the parameter anticipating the power demand of said motor, such as the primary motor 300 or the secondary motor 300, is also selected from a set of possible values for the anticipating parameter, which set of possible values for the anticipating parameter comprises at least the values "on" and "off'; and the power demand of the motor of said motor is detected when the value for the parameter anticipating the power demand of the motor is "on"; the power demand of said motor is compared with the power produced by the motor; the change in the power demand of said motor is detected; and on the basis of the detected change in the power demand, the output of the primary motor is changed to correspond to the change in the power demand; and when the value for the parameter for anticipating the power demand of the motor is "off', the operations for changing the output of the primary motor are passed.

As an alternative or in addition to the pressure sensor, it is possible to use a sensor configured to measure the rotation speed of the secondary motor 330. If the rotation speed drops too low, this can be interpreted as a need to increase the output of the primary motor 300, such as a need to increase the rotation speed of the primary motor 300.

It is obvious that even if the load transportation machine were used for other work than said driving, either one of these two possible work steps can be detected as the work step, and the primary motor 300 can be controlled in the above described way, for example according to Table 2. For example when unloading or loading, the work step can be, for example, driving with a load, and the value for the control parameter (or parameters) of the primary motor 300 can be set accordingly.

Furthermore, it has been found that the economy of the load transportation machine 100 can be optimized more accurately by detecting the work step more accurately. For example, if the load transportation machine 100 further comprises means 200 for loading and/or means for unloading (the same or different from the means for loading) the load transportation machine, three different work steps can be detected, wherein the third step is changing the load of the load transportation machine, in addition to the above mentioned two steps. Thus, the set of possible work steps comprises the steps of:
- driving without a load,
- driving with a load, and
- changing the quantity of the load of the load transportation machine 300.

Changing the quantity of the load refers to loading or unloading with a means 200 intended for it in the load transportation machine 100. For example, loading or unloading by means of the crane arrangement 210 and the loading grapple 220. Table 3 shows, as an example, the selection of the above described parameters in a situation in which the set of possible work steps comprises the above mentioned three steps.

**Table 3. An example of units to be controlled by means of a detected work step, control parameters to be used, and suitable values for the control parameters relating to different work steps, in the case of three possible different work steps.**

| **Unit to be controlled** | **Control parameter** | **Work step:** | **Work step:** | **Work step:** |
|---|---|---|---|---|
| | | Driving without a load | Change in load quantity | Driving with a load |
| Primary motor | Peppiness | Low | Optimized for crane use | Aggressive |
| Primary motor | Rotation speed | Low | Corresponding to crane use | High |
| Power transmission | Driving speed (Gear status) | High speed | Average speed | Low speed |
| Hydrostatic pump | Pressure manipulation | On | On | Off |
| Control system | Anticipation of power demand | Off | On | On |

"Use of the crane" shown in Tables 3 and 4 refers to the application of at least one boom 214 in the crane arrangement 210, that is, the application of the crane arrangement 210.

The peppiness of the primary motor 300, optimized for the use of the crane, may depend on, for example, the load to be loaded.

The rotation speed of the primary motor 300, corresponding to the use of the crane, may depend on, for example, the desired speed of loading or unloading.

When unloading or loading, the driving speed is shown to be "average driving speed". It may be possible to apply the gear 340 and/or reduction gear 340 for setting such a third state, which is used for achieving the average driving speed. Alternatively, upon loading and unloading, because the load transportation machine typically does not move (upon unloading) or may move very slowly (upon loading), the desired driving speed can be set very low when the work step is "change in load quantity", for example the same as in the work step "driving with a load". The driving speed can be controlled by means of the gear, the reduction gear, and/or the secondary motor.

Table 3 shows some control parameters for the case of a forwarder, wherein the tool 200 comprises a crane arrangement 210 and its boom 214. For a person skilled in the art, it is obvious how the control parameters can be selected in a load transportation machine in which the loading or unloading means does not comprise a boom. More generally, the third state can be, for example, "use of tool", wherein the corresponding load transportation machine comprises a tool in general. Correspondingly, the load transportation machine, such as a tractor excavator, may comprise, for example,
- a tool, such as an excavator bucket, and
- means for transporting a load, such as another bucket which can be loaded.
Thus, the third work step can relate to excavating with the tractor excavator and moving the excavated material into a conveying bucket. Thus, in the work step "change in the load quantity", it is possible to take into account how hard work the loading is.

Referring to Fig. 2, in a working day of many load transportation machines 100, for example forwarders 100, it is possible to distinguish similar work cycles, each comprising four different work steps. Thus, the corresponding load transportation machine typically comprises means for loading and unloading the load transportation machine. Thus, said means are configured for both loading and unloading. Said four (possible) work steps are presented in Table 4.

**Table 4. An example of units to be controlled by means of a detected work step, control parameters to be used, and suitable values for the control parameters relating to different work steps, in the case of four possible different work steps.**

| **Unit to be controlled** | **Control parameter** | **Work step:** | **Work step:** | **Work step:** | **Work step** |
|---|---|---|---|---|---|
| | | Driving without a load | Change in load quantity | Driving with a load | Unloading |
| Primary motor | Peppiness | Low | Optimized for crane use | Aggressive | Optimized for crane use |
| Primary motor | Rotation speed | Low | Corresponding to crane use | High | Corresponding to crane use |
| Power transmission | Driving speed (Gear status) | High speed | Average speed | Low speed | Average speed |
| Hydrostatic pump | Pressure manipulation | On | On | Off | On |
| Control system | Anticipation of power demand | Off | On | On | Off |

In addition to a work step of long duration, the primary motor 300 can be controlled on the basis of another signal. For example, it is possible to detect a control signal indicating an operation of short duration, on the basis of which the primary motor 300 can be controlled. For example, the primary motor 300 can be controlled in such a way that when a given operation of short duration is detected, for example the manipulation of a trunk by means of the crane arrangement 210, the parameters used for controlling the primary motor are selected by utilizing both
- the detected work step (of long duration) and
- the detected operation (of short duration).

Examples of different operations have been presented above in connection with the detecting of the work step. An operation of short duration can typically be detected on the basis of a single control movement by the driver; a work step of longer duration, in turn, can be detected on the basis of at least two successive control movements as presented above.

Said operation of short duration can typically take - for example is expected to take - for example less than 2 minutes, less than 1.5 minutes, or less than a minute. Said operation of short duration can also take longer, such as less than 5 minutes, if the work step is expected to take longer than that. The terms "typically" and "expected" have been discussed above.

For example when a trunk is loaded, this loading corresponds to an operation of short duration. In the loading, some first values for the control parameters of the primary motor can be applied, which can be selected firstly on the basis that the work step is known to be loading, and also on the basis that a given trunk, or a trunk of a given weight, is known to be manipulated.

Correspondingly, when said trunk is unloaded, some second values can be used for the control parameters of the primary motor. The second values can be selected, firstly, on the basis that the work step is known to be unloading, and also on the basis that said trunk is known to be manipulated. Even if it were exactly the same trunk or another trunk with the same weight but the detected work step were different, at least one of said second values for the control parameters of the primary motor can differ from the corresponding first value for the control parameter of the primary motor.

Correspondingly, if the driver detects that the load transportation machine is stuck with an obstacle, such as a depression, pit, ditch, elevation, hummock, fallen tree trunk, rock, or stump, the driver typically responds by momentarily pressing the accelerator pedal further down (if possible) in order to cross said obstacle. Thus, accelerating is the operation that can be detected in the control system of the load transportation machine. The primary motor 300 can thus be controlled in a different way, depending on whether the detected work step is driving with or without a load.

In an embodiment, the ongoing work step can be set by the driver. Such an option is particularly appropriate if the load transportation machine does not comprise a sensor or sensors for measuring the load quantity. In this case, the work step may need to be set manually when the load transportation machine is started. In a corresponding embodiment,
- a signal indicating the work step is received, and
- the work step of the load transportation machine is detected by using said signal.
For example, the driver of the load transportation machine can give such a signal by applying a suitable controller.

The operations of the above presented method can be performed, for example, by means of the control system 400 for the primary motor, which is suitable for controlling the primary motor 300 of the load transportation machine 100. The control system 400 for the primary motor can be integrated in the control system of the load transportation machine mentioned previously. In particular, the control system 400 of the primary motor is suitable for controlling the primary motor 300 of the load transportation machine 100 when the primary motor 300 is a combustion engine or a diesel engine, optionally a compressed air diesel engine.

Such a control system for the primary motor comprises a control computer 410 and means 420 for transmitting the value for the control parameter of the primary motor to the control unit 310 of the primary motor, for example from said control computer 410. The means 420 for transmitting the value for the control parameter of the primary motor can comprise, for example, an electric wire, via which said data is transmitted electrically. The means 420 for transmitting the value for the control parameter of the primary motor can comprise, for example, a wireless transmitter for transmitting said value using a radio frequency signal. Correspondingly, the control unit 310 for the primary motor is configured to receive said value. In a corresponding manner, the control unit 310 of the primary motor comprises means 430 for receiving said value, such as an electric wire or connector, or a radio receiver. Furthermore, the control system of the primary motor may be arranged to run the above described method by means of said control computer.

The control system can comprise means for receiving a control movement by the driver, for example various pedals and controllers, and related sensors for detecting the status of said controller. Optionally, such sensors can be connected to a tool 200, such as a crane arrangement 210 and/or a loading grapple 220, for example for detecting the position of the tool 200.

In an embodiment, the control system is configured to receive data about the control movements by the driver and, by means of said data, to detect a work step of long duration of the load transportation machine as described above.

The control system can comprise one or more sensors configured to provide data about the quantity of the load in the load space 134 and/or in the tools 200 of the load transportation machine 100, about the driving speed of the load transportation machine 100, etc.

The control system can comprise means for detecting the power demand of the primary motor 300 and/or the secondary motor 330. For example, the control system can comprise a pressure sensor for detecting the power demand of the secondary motor. For example, the control system can comprise a rotation speed sensor for detecting the power demand of the secondary motor.

The control system can comprise means for receiving a signal that indicates the work step, for example a wired or wireless data transmission interface. The control system can comprise means for transmitting a signal that indicates the work step, for example a controller for indicating such a step.

The control system is configured to take the necessary measurements for determining the ongoing work step. Variables to be measured have been presented above in more detail. The control system can be used for monitoring (measuring) loading and unloading, for example. Moreover, the control system can be used for monitoring the driving of the load transportation machine. The control system is configured to detect said work step by means of the results of these measurements.

The control system can comprise modules connected to each other by a bus. Modules of the system include, for example, a display module, a central processing unit of a computer, a bus distribution module, a seat module, a crane system module, a power transmission module, and a motor control unit. The seat module is equipped with the control devices needed for controlling the system, by which the driver can perform said control movements for moving the load transportation machine or a part thereof. The crane system module is responsible for the control of the valves of the crane system, and it optionally provides the control system with data on the position of the booms 214 and/or the joints 212 of the crane system 210. The power transmission module is responsible for the control of the primary motor 300 and the drive transmission of the load transportation machine, as well as the related auxiliary functions and communication. The control unit 310 of the primary motor can be connected to the power transmission module, wherein the primary motor can be controlled by the power transmission module and the control unit 310.

The fuel consumption at each moment of time is available as measurement data from the control system of the primary motor 300. In order to obtain reference data on the functionality of the control system of the primary motor 300, particularly the effect of the control system on the economy of the load transportation machine 100, the fuel consumption of the load transportation machine 100 can be monitored for each work step. In particular, the following factors regarding fuel consumption can be monitored:
- total fuel consumption,
- fuel consumption when driving without a load, and
- fuel consumption when driving with a load.

Moreover, it is possible to monitor one or more of the following:
- fuel consumption during loading when employing the grapple,
- fuel consumption during unloading when employing the grapple,
- fuel consumption during loading when driving and employing the grapple,
- fuel consumption during loading when driving, and
- fuel consumption during idling.

## Claims

1. A method for controlling a primary motor (300) of a load transportation machine (100), wherein
said load transportation machine (100)
• is configured to be driven on the ground at least off-road, with and without a load in an alternating manner,
• is suited to the needs of forestry, agriculture, construction, and/or earth construction, and
• comprises the primary motor (300), a control unit (310) for the primary motor (300), and means (200) for loading the load transportation machine (100) and/or means (200) for unloading the load transportation machine (100),
in which method
- the work step of the load transportation machine (100) is detected (a) on the basis of a first control movement by the driver of the load transportation machine (100), and (b) on the basis of a second control movement by the driver of the load transportation machine (100), the duration of the work step being at least 2 minutes, and the work step being selected from a set of possible work steps comprising at least three work steps;
- determining a value for at least one control parameter of the primary motor (300) of the load transportation machine by utilizing the detected work step;
- transmitting said value of the control parameter of the primary motor (300) to the control unit for the primary motor (300); and
- controlling the primary motor (300) by means of said value of the control parameter of the primary motor (300);
wherein the first control movement is used for moving the load transportation machine (100) or a part thereof and the second control movement is used for moving the load transportation machine (100) or a part thereof, the part to be moved is at least one of the following:
• a wheel (114, 124) for driving the load transportation machine (100);
• a tool (200) of the working machine (100);
• a cabin (116) of the working machine; and
the set of possible work steps comprises the steps of:
• driving without a load,
• driving with a load, and
• changing the quantity of the load of the load transportation machine (100),
**characterized in that** said load transportation machine (100) further comprises means (310) for detecting the power demand of a motor (300, 330), wherein the method further comprises:
- selecting a value for a parameter for anticipating the power demand of said motor (300, 330) from a set of possible values for the parameter for anticipating, which set of possible values for the parameter for anticipating comprises at least the values "on" and "off"; and
- when the value for the parameter for anticipating the power demand of the motor (300, 330) is "on",
• selecting the power demand of said motor (300, 330),
• comparing the power demand of said motor (300, 330) with the power output of said motor (300, 330),
• detecting a change in the power demand of said motor (300, 330) on the basis of said comparison, and
• on the basis of the detected change in the power demand, changing the power output of the motor (300, 330) to correspond to the change in the power demand; and
- when the value for the parameter for anticipating the power demand of the motor (300, 330) is "off",
• disregarding the operations for changing the power output of the motor (300).

2. The method according to claim 1, wherein
- recording a first time taken for said first control movement and recording a second time taken for said second control movement;
- receiving reference data containing data on the typical duration of the first control movement and on the typical duration of the second control movement, wherein the work step specific data relates to each work step belonging to a set of possible work steps;
- comparing the first time with said reference data and comparing the second time with said reference data; and
- detecting the work step of the load transportation machine (100) on the basis of said comparisons.

3. The method according to claim 2, wherein the work step of the load transportation machine (100) is further detected
- on the basis of a third control movement by the driver of the load transportation machine (100), the third control movement being used for moving the load transportation machine (100) or a part thereof, and/or
- on the basis of the time passed from said second control movement by the driver, and/or
- on the basis of the time between said second control movement and said first control movement.

4. The method according to any of the claims 1 to 3, comprising
- controlling at least the rotation speed of the primary motor (300) of the load transportation machine by means of said value of the control parameter of the primary motor (300); optionally also controlling the peppiness of the primary motor (300).

5. The method according to any of the claims 1 to 4, wherein
- said load transportation machine comprises a hydrostatic drive transmission system (HST) comprising
• a secondary motor (330) which is a hydraulic motor and is configured to generate the power needed for driving the load transportation machine,
• a hydrostatic pump (320) for pressurizing pressure medium, wherein said hydrostatic pump (320) is arranged as the power source for said secondary motor (330), and the primary motor (300) is configured to power the hydrostatic pump (320) for pressurizing pressure medium and thereby for generating power to the secondary motor (330), and
• means (114, 124) for driving the load transportation machine (100), and means (340) for power transmission from the secondary motor (330) to the means (114, 124) for driving the load transportation machine (100),
the method comprising
- driving the hydrostatic drive transmission system (HST) of the load transportation machine (100) by utilizing the detected work step.

6. The method according to any of the claims 1 to 5, wherein
- said load transportation machine (100) further comprises a secondary motor (330),
the method further comprising
- selecting at least one value for a parameter for controlling the use of the secondary motor (330) of the load transportation machine (100), utilizing the detected work step, and
- controlling the secondary motor (330) of the load transportation machine (100), or the power source of the secondary motor (330), by means of said value of the parameter for controlling the use of the secondary motor (330).

7. The method according to claim 6, wherein
- said secondary motor (330) is a hydraulic motor,
- said secondary motor (330) is configured to generate the power needed for driving the load transportation machine (100),
- said load transportation machine (330) further comprises a hydrostatic pump (320) for pressurizing pressure medium, wherein said hydrostatic pump (320) is arranged as the power source for said secondary motor (330), and
- said primary motor (300) is configured to power the hydrostatic pump (320) for pressurizing pressure medium and thereby for powering the secondary motor (330), the method comprising
- selecting a suitable pressure and/or volume flow for the pressure medium, by utilizing the detected work step, and
- controlling the hydrostatic pump (320) of the load transportation machine (100) by means of said suitable pressure and/or volume flow of the pressure medium.

8. The method according to any of the claims 1 to 7, wherein
- said load transportation machine further comprises means (114, 124) for driving the load transportation machine (100), and means (340) for power transmission from the motor (300, 330) to the means for driving the load transportation machine (100), the method further comprising
- selecting, by utilizing the detected work step, control parameters for the means (340) of the load transportation machine (100) for power transmission from the motor (300, 330) to the means (114, 124) for driving the load transportation machine (100), and
- controlling the means (340) for power transmission from the motor (300, 330) to the means (114, 124) for driving the load transportation machine (100).

9. The method according to claim 8, wherein
- said means (340) for power transmission from the motor (300, 330) to the means (114, 124) for driving the load transportation machine (100) are configured to transmit power from the secondary motor (330) to the means (114, 124) for driving the load transportation machine (100),
- said secondary motor (330) is a hydraulic motor,
- said load transportation machine (100) further comprises a hydrostatic pump (320) for pressurizing pressure medium, wherein said hydrostatic pump (320) is arranged as the power source for said secondary motor (330), and
- said primary motor (300) is configured to power the hydrostatic pump (320) for pressurizing pressure medium and thereby for powering the secondary motor (330).

10. The method according to any of the claims 1 to 9, wherein
- the load transportation machine (100) is configured to be driven off-road in a forest;
- the set of possible work steps comprises the steps of driving without a load and driving with a load, and the method comprising
- detecting the work step of the load transportation machine (100) in such a way that
• driving without a load relates to driving the load transportation machine (100) without a load off-road in a forest, and
• driving with a load relates to driving the load transportation machine (100) with a load off-road in a forest, and
- selecting control parameters for the primary motor (300) of the load transportation machine (100) by utilizing the detected work step.

11. The method according to any of the claims 1 to 10, the method further comprising
- detecting an operation of short duration to be implemented by the load transportation machine (100), the operation of short duration taking less time than a typical duration of said detected work step,
- determining a value for at least one control parameter of the primary motor (300) by utilizing the detected work step and the detected operation;
- transmitting said value of the control parameter of the primary motor (300) to the control unit (310) for the primary motor (300); and
- controlling the primary motor by means of said value of the control parameter of the primary motor (300).

12. A control system (400) for a primary motor (300), suitable for controlling the primary motor (300) of a load transportation machine (100) which comprises means (200) for loading the load transportation machine (100) and/or means (200) for unloading the load transportation machine (100), the control system for the primary motor (300)
- comprising a control computer (410) and means (420) for transmitting the value of the control parameter of the primary motor (300) to the control unit (310) of the primary motor (300); and
- being configured, by means of said control computer (410),
• to detect the work step of the load transportation machine (100) (a) on the basis of a first control movement by the driver of the load transportation machine (100) and (b) on the basis of a second control movement by the driver of the load transportation machine (100), the duration of the work step being at least 2 minutes, and the work step being selected from a set of possible work steps comprising at least three work steps;
• to determine a value for at least one control parameter of the primary motor (300) by utilizing the detected work step; and
• to transmit said value of the control parameter of the primary motor (300) to the control unit (310) for the primary motor (300);
wherein the first control movement is used for moving the load transportation machine (100) or a part thereof and the second control movement is used for moving the load transportation machine (100) or a part thereof, the part to be moved is at least one of the following:
• a wheel (114, 124 for driving the load transportation machine (100);
• a tool (200) of the working machine;
• a cabin (116) of the load transportation machine (100); and
the set of possible work steps comprising the steps of:
• driving without a load,
• driving with a load, and
• changing the quantity of the load of the load transportation machine (100),
**characterized in that** said load transportation machine (100) further comprises means (310) for detecting the power demand of a motor (300, 330), wherein the control system being further configured, by means of said control computer:
- to select a value for a parameter for anticipating the power demand of said motor (300) from a set of possible values for the parameter for anticipating, which set of possible values for the parameter for anticipating comprises at least the values "on" and "off"; and
- when the value for the parameter for anticipating the power demand of the motor (300, 330) is "on",
• to select the power demand of said motor (300, 330),
• to compare the power demand of said motor (300, 330) with the power output of said motor (300, 330),
• to detect a change in the power demand of said motor (300, 330) on the basis of said comparison, and
• on the basis of the detected change in the power demand, to change the power output of the motor (300, 330) to correspond to the change in the power demand; and
- when the value for the parameter for anticipating the power demand of the motor (300, 330) is "off",
• to disregard the operations for changing the power output of the motor (300, 330).

13. A load transportation machine (100) which
- is configured to be driven on the ground at least off-road, with and without a load in an alternating manner,
- is suited to the needs of forestry, agriculture, construction, and/or earth construction, and
- comprises a primary motor (300) and a control unit (310) for the primary motor (300), the primary motor (300) in the load transportation machine (100) being a combustion engine; the load transportation machine (100) comprising means (200) for loading the load transportation machine (100) and/or means (200) for unloading the load transportation machine (100), and
- a control system (400) for the primary motor (300) of the load transportation machine (100) according to claim 12.

14. A forwarder (100) comprising
- a primary motor (300),
- a control unit (310) for the primary motor (300), and
- a control system (400) for the primary motor (300) according to claim 12.

## Patentansprüche

1. Ein Verfahren zum Steuern eines primären Motors (300) einer Lasttransportmaschine (100), wobei
die Lasttransportmaschine (100)
• konfiguriert ist, um am Boden zumindest im Gelände abwechselnd mit und ohne Last gefahren zu werden,
• den Anforderungen der Forstwirtschaft, der Landwirtschaft, des Baus und/oder Erdbaus entspricht, und
• den primären Motor (300), eine Steuereinheit (310) für den primären Motor (300) und Mittel (200) zum Beladen der Lasttransportmaschine (100) und/oder Mittel (200) zum Entladen der Lasttransportmaschine (100) aufweist,
wobei bei dem Verfahren
- der Arbeitsschritt der Lasttransportmaschine (100) erfasst wird (a) auf der Basis einer ersten Steuerbewegung durch den Fahrer der Lasttransportmaschine (100) und (b) auf der Basis einer zweiten Steuerbewegung durch den Fahrer der Lasttransportmaschine (100), wobei die Dauer des Arbeitsschritts mindestens 2 Minuten beträgt, und der Arbeitsschritt aus einer Gruppe von möglichen Arbeitsschritten, die mindestens drei Arbeitsschritte umfasst, ausgewählt wird;
- Bestimmen eines Wertes für mindestens einen Steuerparameter des primären Motors (300) der Lasttransportmaschine unter Einsatz des erfassten Arbeitsschrittes;
- Übertragen des Wertes des Steuerparameters des primären Motors (300) an die Steuereinheit für den primären Motor (300); und
- Steuern des primären Motors (300) mittels des Wertes des Steuerparameters des primären Motors (300);
wobei die erste Steuerbewegung zum Bewegen der Lasttransportmaschine (100) oder eines Teils davon und die zweite Steuerbewegung zum Bewegen der Lasttransportmaschine (100) oder eines Teils davon verwendet wird, wobei der zu bewegende Teil mindestens eines der folgenden ist:
• ein Rad (114, 124) zum Antreiben der Lasttransportmaschine (100);
• ein Werkzeug (200) der Arbeitsmaschine (100);
• eine Kabine (116) der Lasttransportmaschine; und
die Gruppe möglicher Arbeitsschritte die folgenden Schritte umfasst:
• Fahren ohne eine Last,
• Fahren mit einer Last und
• Ändern der Größe der Last des Lasttransportmaschine (100),
**dadurch gekennzeichnet, dass** die Lasttransportmaschine (100) ferner Mittel (310) zum Erfassen des Leistungsbedarfs eines Motors (300, 330) aufweist, wobei das Verfahren ferner umfasst:
- Auswählen eines Wertes für einen Parameter zum Antizipieren des Leistungsbedarfs des Motors (300, 330) aus einer Gruppe möglicher Werte für den Parameter zum Antizipieren, wobei die Gruppe möglicher Werte für den Parameter zum Antizipieren mindestens die Werte "ein" und "aus" umfasst; und
- wenn der Wert für den Parameter zum Antizipieren des Leistungsbedarfs des Motors (300, 330) "ein" ist,
• Auswählen des Leistungsbedarfs des Motors (300, 330),
• Vergleichen des Leistungsbedarfs des Motors (300, 330) mit der Leistungsabgabe des Motors (300, 330),
• Erfassen einer Änderung des Leistungsbedarfs des Motors (300, 330) auf der Basis des Vergleichs, und
• auf der Basis der erfassten Änderung des Leistungsbedarfs, Ändern der Leistungsabgabe des Motors (300, 330), um der Änderung der Leistungsanforderung zu entsprechen; und
- wenn der Wert für den Parameter zum Antizipieren des Leistungsbedarfs des Motors (300, 330) "aus" ist,
• Ignorieren der Vorgänge zum Ändern der Leistungsabgabe des Motors (300).

2. Verfahren nach Anspruch 1, wobei
- Aufzeichnen einer ersten Zeit, die für die erste Steuerbewegung beansprucht wurde, und Aufzeichnen einer zweiten Zeit, die für die zweite Steuerbewegung beansprucht wurde;
- Empfangen von Bezugsdaten, die Daten über die typische Dauer der ersten Steuerbewegung und über die typische Dauer der zweiten Steuerbewegung enthalten, wobei sich die arbeitsschrittspezifischen Daten auf jeden Arbeitsschritt beziehen, der zu einer Gruppe möglicher Arbeitsschritte gehört;
- Vergleichen der ersten Zeit mit den Bezugsdaten und Vergleichen der zweiten Zeit mit den Bezugsdaten; und
- Erfassen des Arbeitsschritts der Lasttransportmaschine (100) auf der Basis dieser Vergleiche.

3. Verfahren nach Anspruch 2, wobei der Arbeitsschritt der Lasttransportmaschine (100) weiterhin erfasst wird:
- auf der Basis einer dritten Steuerbewegung durch den Fahrer der Lasttransportmaschine (100), wobei die dritte Steuerbewegung zum Bewegen der Lasttransportmaschine (100) oder eines Teils davon verwendet wird, und/oder
- auf der Basis der Zeit, die ab der zweiten Steuerbewegung durch den Fahrer verstrichen ist, und/oder
- auf der Basis der Zeit zwischen der zweiten Steuerbewegung und der ersten Steuerbewegung.

4. Verfahren nach einem der Ansprüche 1 bis 3, umfassend
- Steuern mindestens der Drehzahl des primären Motors (300) der Lasttransportmaschine mittels des Wertes des Steuerparameters des primären Motors (300); optional auch Steuern der Stärke des primären Motors (300).

5. Verfahren nach einem der Ansprüche 1 bis 4, wobei
- die Lasttransportmaschine ein hydrostatisches Antriebsübertragungssystem (HST) umfasst, umfassend
• einen sekundären Motor (330), der ein Hydraulikmotor ist und konfiguriert ist, um die zum Antreiben der Lasttransportmaschine erforderliche Leistung zu erzeugen,
• eine hydrostatische Pumpe (320) zur Druckbeaufschlagung eines Druckmediums, wobei die hydrostatische Pumpe (320) als die Energiequelle für den sekundären Motor (330) angeordnet ist, und der primären Motor (300) konfiguriert ist, um die hydrostatische Pumpe (320) zur Druckbeaufschlagung des Druckmediums und damit zum Erzeugen von Energie für den sekundären Motor (330) zu betreiben, und
• Mittel (114, 124) zum Antreiben der Lasttransportmaschine (100) und Mittel (340) zur Kraftübertragung von dem sekundären Motor (330) zu den Mitteln (114, 124) zum Antreiben der Lasttransportmaschine (100),
wobei das Verfahren Folgendes umfasst
- Antreiben des hydrostatischen Antriebsübertragungssystems (HST) der Lasttransportmaschine (100) unter Einsatz des erfassten Arbeitsschrittes.

6. Verfahren nach einem der Ansprüche 1 bis 5, wobei
- die Lasttransportmaschine (100) ferner einen sekundären Motor (330) aufweist,
wobei das Verfahren ferner umfasst:
- Auswählen mindestens eines Wertes für einen Parameter zum Steuern der Verwendung des sekundären Motors (330) der Lasttransportmaschine (100) unter Einsatz des erfassten Arbeitsschrittes und
- Steuern des sekundären Motors (330) der Lasttransportmaschine (100) oder der Energiequelle des sekundären Motors (330) mittels des Wertes des Parameters zum Steuern der Verwendung des sekundären Motors (330).

7. Verfahren nach Anspruch 6, wobei
- der sekundäre Motor (330) ein Hydraulikmotor ist,
- der sekundäre Motor (330) konfiguriert ist, um die zum Antreiben der Lasttransportmaschine (100) erforderliche Leistung zu erzeugen,
- die Lasttransportmaschine (330) ferner eine hydrostatische Pumpe (320) zur Druckbeaufschlagung des Druckmediums aufweist, wobei die hydrostatische Pumpe (320) als die Energiequelle für den sekundären Motor (330) angeordnet ist, und
- der primäre Motor (300) konfiguriert ist, um die hydrostatische Pumpe (320) zur Druckbeaufschlagung des Druckmediums und somit zur Energieversorgung des sekundären Motors (330) mit Energie zu versorgen, wobei das Verfahren umfasst:
- Auswählen eines geeigneten Drucks und/oder Volumenstroms für das Druckmedium unter Einsatz des erfassten Arbeitsschritts, und
- Steuern der hydrostatischen Pumpe (320) der Lasttransportmaschine (100) mittels des geeigneten Drucks und/oder Volumenstroms des Druckmediums.

8. Verfahren nach einem der Ansprüche 1 bis 7, wobei
- die Lasttransportmaschine ferner Mittel (114, 124) zum Antreiben der Lasttransportmaschine (100) und Mittel (340) zur Energieübertragung von dem Motor (300, 330) an die Mittel zum Antreiben der Lasttransportmaschine (100) aufweist, wobei das Verfahren ferner umfasst:
- Auswählen, unter Einsatz des erfassten Arbeitsschrittes, von Steuerparametern für die Mittel (340) der Lasttransportmaschine (100) zur Energieübertragung von dem Motor (300, 330) auf die Mittel (114, 124) zum Antreiben der Lasttransportmaschine (100), und
- Steuern der Mittel (340) zur Energieübertragung von dem Motor (300, 330) auf die Mittel (114, 124) zum Antreiben des Lasttransportmaschine (100).

9. Verfahren nach Anspruch 8, wobei
- die Mittel (340) zur Energieübertragung von dem Motor (300, 330) auf die Mittel (114, 124) zum Antreiben der Lasttransportmaschine (100) konfiguriert sind, um Leistung von dem sekundären Motor (330) auf die Mittel (114, 124) zum Antreiben der Lasttransportmaschine (100) zu übertragen,
- der sekundäre Motor (330) ein Hydraulikmotor ist,
- die Lasttransportmaschine (100) ferner eine hydrostatische Pumpe (320) zur Druckbeaufschlagung des Druckmediums aufweist, wobei die hydrostatische Pumpe (320) als die Energiequelle für den sekundären Motor (330) angeordnet ist, und
- der primäre Motor (300) konfiguriert ist, um die hydrostatische Pumpe (320) zur Druckbeaufschlagung von Druckmedium und damit zum Antreiben des sekundären Motors (330) mit Energie zu versorgen.

10. Verfahren nach einem der Ansprüche 1 bis 9, wobei
- die Lasttransportmaschine (100) konfiguriert ist, um im Gelände in einem Wald gefahren zu werden;
- die Gruppe möglicher Arbeitsschritte die Schritte des Fahrens ohne eine Last und des Fahrens mit einer Last umfasst, wobei das Verfahren Folgendes umfasst:
- Erfassen des Arbeitsschrittes der Lasttransportmaschine (100) derart, dass
• das Fahren ohne eine Last sich auf das Fahren der Lasttransportmaschine (100) ohne eine Last im Gelände in einem Wald bezieht, und
• das Fahren mit einer Last sich auf das Antreiben der Lasttransportmaschine (100) mit einer Last im Gelände in einem Wald bezieht, und
- Auswählen von Steuerparametern für den primären Motor (300) der Lasttransportmaschine (100) unter Einsatz des erfassten Arbeitsschritts.

11. Verfahren nach einem der Ansprüche 1 bis 10, wobei das Verfahren ferner Folgendes umfasst:
- Erfassen eines Vorgangs von kurzer Dauer, der von der Lasttransportmaschine (100) durchzuführen ist, wobei der Vorgang von kurzer Dauer weniger Zeit als eine typische Dauer des erfassten Arbeitsschritts in Anspruch nimmt,
- Bestimmen eines Wertes für mindestens einen Steuerparameter des primären Motors (300) unter Einsatz des erfassten Arbeitsschrittes und des erfassten Betriebs;
- Übertragen des Wertes des Steuerparameters des primären Motors (300) an die Steuereinheit (310) für den primären Motor (300); und
- Steuern des primären Motors mittels des Wertes des Steuerparameters des primären Motors (300).

12. Ein Steuersystem (400) für einen primären Motor (300), geeignet zum Steuern des primären Motors (300) einer Lasttransportmaschine (100), aufweisend Mittel (200) zum Beladen der Lasttransportmaschine (100) und/oder Mittel (200) zum Entladen der Lasttransportmaschine (100), wobei das Steuersystem für den primären Motor (300)
- einen Steuercomputer (410) und Mittel (420) zum Übertragen des Wertes des Steuerparameters des primären Motors (300) an die Steuereinheit (310) des primären Motors (300) aufweist; und
- mittels des Steuercomputers (410) konfiguriert ist,
• um den Arbeitsschritt der Lasttransportmaschine (100) zu erfassen, und zwar (a) auf der Basis einer ersten Steuerbewegung durch den Fahrer der Lasttransportmaschine (100) und (b) auf der Basis einer zweiten Steuerbewegung durch den Fahrer der Lasttransportmaschine (100), wobei die Dauer des Arbeitsschrittes mindestens 2 Minuten beträgt, und der aus einer Gruppe möglicher Arbeitsschritte ausgewählte Arbeitsschritt mindestens drei Arbeitsschritte umfasst;
• um einen Wert für mindestens einen Steuerparameter des primären Motors (300) unter Einsatz des erfassten Arbeitsschritts zu bestimmen; und
• um den Wert des Steuerparameters des primären Motors (300) an die Steuereinheit (310) für den primären Motor (300) zu übertragen;
wobei die erste Steuerbewegung zum Bewegen der Lasttransportmaschine (100) oder eines Teils davon und die zweite Steuerbewegung zum Bewegen der Lasttransportmaschine (100) oder eines Teils davon verwendet wird, wobei der zu bewegende Teil mindestens eines der folgenden ist:
• ein Rad (114, 124) zum Antreiben der Lasttransportmaschine (100);
• ein Werkzeug (200) der Arbeitsmaschine;
• eine Kabine (116) der Lasttransportmaschine (100); und
wobei die Gruppe möglicher Arbeitsschritte folgende Schritte umfasst:
• Fahren ohne eine Last,
• Fahren mit einer Last und
• Ändern der Größe der Last der Lasttransportmaschine (100),
**dadurch gekennzeichnet, dass** die Lasttransportmaschine (100) ferner Mittel (310) zum Erfassen des Leistungsbedarfs eines Motors (300, 330) aufweist, wobei das Steuersystem ferner konfiguriert ist, mittels des Steuerrechners:
- um einen Wert für einen Parameter zum Antizipieren des Leistungsbedarfs des Motors (300) aus einer Gruppe möglicher Werte für den Parameter zum Antizipieren auszuwählen, wobei die Gruppe möglicher Werte für den Parameter zum Antizipieren mindestens die Werte "ein" und "aus" umfasst; und
- wenn der Wert für den Parameter zum Antizipieren der Leistungsanforderung des Motors (300, 330) "ein" ist,
• um den Leistungsbedarf des Motors (300, 330) auszuwählen,
• um den Leistungsbedarf des Motors (300, 330) mit der Leistungsabgabe des Motors (300, 330) zu vergleichen,
• um eine Änderung des Leistungsbedarfs des Motors (300, 330) auf der Basis des Vergleichs zu erfassen, und
• auf der Basis der erfassten Änderung des Leistungsbedarfs die Leistungsabgabe des Motors (300, 330) zu ändern, um der Änderung des Leistungsbedarfs zu entsprechen; und
- wenn der Wert für den Parameter zum Antizipieren der Leistungsanforderung des Motors (300, 330) "aus" ist,
• um die Vorgänge zum Ändern der Leistungsabgabe des Motors (300, 330) zu ignorieren.

13. Eine Lasttransportmaschine (100), die
- konfiguriert ist, um auf dem Boden zumindest im Gelände abwechselnd mit und ohne Last gefahren zu werden,
- den Anforderungen der Forstwirtschaft, der Landwirtschaft, des Baus und/oder Erdbaus entspricht, und
- einen primären Motor (300) und eine Steuereinheit (310) für den primären Motor (300) aufweist, wobei der primäre Motor (300) in der Lasttransportmaschine (100) ein Verbrennungsmotor ist; wobei die Lasttransportmaschine (100) Mittel (200) zum Beladen der Lasttransportmaschine (100) und/oder Mittel (200) zum Entladen der Lasttransportmaschine (100) umfasst, und
- ein Steuersystem (400) für den primären Motor (300) der Lasttransportmaschine (100) nach Anspruch 12.

14. Ein Tragrückeschlepper (100), aufweisend
- einen primären Motor (300),
- eine Steuereinheit (310) für den primären Motor (300) und
- ein Steuersystem (400) für den primären Motor (300) nach Anspruch 12.

## Revendications

1. Procédé pour la commande d'un moteur primaire (300) d'une machine de transport de charge (100), dans lequel :
ladite machine de transport de charge (100)
• est configurée pour être conduite sur le sol au moins hors des routes, avec et sans charge en alternance ;
• est appropriée pour répondre aux besoins de la sylviculture, de l'agriculture, de la construction et/ou des travaux de terrassement ; et
• comprend le moteur primaire (300), une unité de commande (310) pour le moteur primaire (300) et des moyens (200) pour charger la machine de transport de charge (100) et/ou des moyens (200) pour décharger la machine de transport de charge (100) ;
procédé dans lequel
- l'étape de travail de la machine de transport de charge (100) est détectée (a) sur base d'un premier mouvement de commande par le conducteur de la machine de transport de charge (100) et (b) sur base d'un deuxième mouvement de commande par le conducteur de la machine de transport de charge (100), la durée de l'étape de travail s'élevant à au moins deux minutes et l'étape de travail étant choisie parmi un jeu d'étapes de travail possibles comprenant au moins trois étapes de travail dans lesquelles ;
- on détermine une valeur pour au moins un paramètre de commande du moteur primaire (300) de la machine de transport de charge en utilisant l'étape de travail détectée ;
- on transmet ladite valeur du paramètre de commande du moteur primaire (300) à l'unité de commande pour le moteur primaire (300) ; et
- on commande le moteur primaire (300) au moyen de ladite valeur du paramètre de commande du moteur primaire (300) ;
dans lequel le premier mouvement de commande est utilisé pour déplacer la machine de transport de charge (100) ou une partie de cette dernière et le deuxième mouvement de commande est utilisé pour déplacer la machine de transport de charge (100) ou une partie de cette dernière, la partie à déplacer représentant au moins une partie choisie parmi les suivantes :
• une roue (114, 124) pour l'entraînement de la machine de transport de charge (100) ;
• un instrument de travail (200) de la machine de travail (100) ;
• une cabine (116) de la machine de travail ; et
le jeu d'étapes de travail possibles comprend les étapes dans lesquelles :
• on conduit en l'absence d'une charge ;
• on conduit avec une charge ; et
• on modifie la quantité de la charge de la machine de transport de charge (100) ;
**caractérisé en ce que** ladite machine de transport de charge (100) comprend en outre un moyen (310) pour la détection de la demande en puissance d'un moteur (300, 330), dans lequel le procédé comprend en outre le fait de :
- choisir une valeur pour un paramètre destiné à anticiper la demande en puissance dudit moteur (300, 330) à partir d'un jeu de valeurs possibles pour le paramètre destiné à l'anticipation, ledit jeu de valeurs possibles pour le paramètre destiné à l'anticipation comprenant au moins les valeurs « sous tension » et « hors tension » ; et
- lorsque la valeur pour le paramètre destiné à l'anticipation de la demande en puissance du moteur (300, 330) est « sous tension » :
• choisir la demande en puissance dudit moteur (300, 330) ;
• comparer la demande en puissance dudit moteur (300, 330) à la puissance de sortie dudit moteur (300, 330) ;
• détecter un changement concernant la demande en puissance dudit moteur (300, 330) sur base de ladite comparaison ; et
• sur base du changement détecté concernant la demande en puissance, modifier la puissance de sortie du moteur (300, 330) pour qu'elle corresponde au changement concernant la demande en puissance ; et
- lorsque la valeur pour le paramètre destiné à l'anticipation de la demande en puissance du moteur (300, 330) est « hors tension » :
• ignorer les opérations destinées à la modification de la puissance de sortie du moteur (300).

2. Procédé selon la revendication 1, dans lequel :
- on enregistre un premier moment adopté pour ledit premier mouvement de commande et on enregistre un deuxième moment adopté pour ledit deuxième mouvement de commande ;
- on reçoit des données contenant des données de référence concernant la durée spécifique du premier mouvement de commande et concernant la durée spécifique du deuxième mouvement de commande ; dans lequel les données spécifiques de l'étape de travail concernent chaque étape de travail faisant partie d'un jeu d'étapes de travail possibles ;
- on compare le premier moment auxdites données de référence et on compare le deuxième moment auxdites données de référence ; et
- on détecte l'étape de travail de la machine de transport de charge (100) en se basant sur lesdites comparaisons.

3. Procédé selon la revendication 2, dans lequel l'étape de travail de la machine de transport de charge (100) est en outre détectée :
- sur la base d'un troisième mouvement de commande par le conducteur de la machine de transport de charge (100), le troisième mouvement de commande étant utilisé pour le déplacement de la machine de transport de charge (100) ou d'une partie de cette dernière ; et/ou
- sur la base du laps de temps écoulé à partir dudit deuxième mouvement de commande par le conducteur ; et/ou
- sur la base du laps de temps entre ledit deuxième mouvement de commande et ledit premier mouvement de commande.

4. Procédé selon l'une quelconque des revendications 1 à 3, comprenant le fait de :
- commander au moins la vitesse de rotation du moteur primaire (300) de la machine de transport de charge au moyen de ladite valeur du paramètre de commande du moteur primaire (300) ; le cas échéant, commander également l'énergie du moteur primaire (300).

5. Procédé selon l'une quelconque des revendications 1 à 4, dans lequel :
- ladite machine transport de charge comprend un système de transmission à commande hydrostatique (HST) comprenant :
• un moteur secondaire (330) à savoir un moteur hydraulique qui est configuré pour générer la puissance requise pour la conduite de la machine de transport de charge ;
• une pompe hydrostatique (320) pour la mise sous pression d'un milieu sous pression ; dans lequel ladite pompe hydrostatique (320) est conçue pour faire office de source d'énergie pour ledit moteur secondaire (330), et le moteur primaire (300) est configuré pour alimenter la pompe hydrostatique (320) pour la mise sous pression du milieu sous pression et ainsi pour générer l'énergie en direction du moteur secondaire (330) ; et
• des moyens (114, 124) destinés à la conduite de la machine de transport de charge (100), et des moyens (340) destinés à transmettre l'énergie depuis le moteur secondaire (330) jusqu'aux moyens (114, 124) destinés à la conduite de la machine de transport de charge (100) ;
le procédé comprenant le fait de :
- entraîner le système de transmission à commande hydrostatique (HST) de la machine de transport de charge (100) en utilisant l'étape de travail détectée.

6. Procédé selon l'une quelconque des revendications 1 à 5, dans lequel :
- ladite machine de transport de charge (100) comprend en outre un moteur secondaire (330) ;
le procédé comprenant en outre le fait de
- choisir au moins une valeur pour un paramètre destiné à la commande de l'utilisation du moteur secondaire (330) de la machine de transport de charge (100) en utilisant l'étape de travail détectée ; et
- commander le moteur secondaire (330) de la machine de transport de charge (100) ou la source d'énergie du moteur secondaire (330) au moyen de ladite valeur du paramètre destiné à la commande de l'utilisation du moteur secondaire (330).

7. Procédé selon la revendication 6, dans lequel :
- ledit moteur secondaire (330) est un moteur hydraulique ;
- ledit moteur secondaire (330) est configuré pour générer la puissance requise pour la conduite de la machine de transport de charge (100) ;
- ladite machine de transport de charge (330) comprend en outre une pompe hydrostatique (320) pour la mise sous pression d'un milieu sous pression ; dans lequel ladite pompe hydrostatique (320) est conçue pour faire office de source d'énergie pour ledit moteur secondaire (330) ; et
- ledit moteur primaire (300) est configuré pour alimenter la pompe hydrostatique (320) pour la mise sous pression du milieu sous pression et ainsi pour alimenter le moteur secondaire (330) en énergie; le procédé comprenant le fait de :
- choisir une pression et/ou un débit volumique approprié pour le milieu sous pression en utilisant l'étape de travail détectée ; et
- commander la pompe hydrostatique (320) de la machine de transport de charge (100) au moyen de ladite pression et/ou dudit débit volumique approprié du milieu sous pression.

8. Procédé selon l'une quelconque des revendications 1 à 7, dans lequel :
- ladite machine de transport de charge comprend en outre des moyens (114, 124) destinés à l'entraînement de la machine de transport de charge (100), et des moyens (340) destinés à transmettre l'énergie depuis le moteur (300, 330) jusqu'aux moyens destinés à l'entraînement de la machine de transport de charge (100), le procédé comprenant en outre le fait de :
- choisir, en utilisant l'étape de travail détectée, des paramètres de commande pour les moyens (340) de la machine de transport de charge (100) pour la transmission d'énergie depuis le moteur (300, 330) jusqu'aux moyens (114, 124) destinés à l'entraînement de la machine de transport de charge (100) ; et
- commander les moyens (340) destinés à transmettre l'énergie depuis le moteur (300, 330) jusqu'aux moyens (114, 124) destinés à l'entraînement de la machine de transport de charge (100).

9. Procédé selon la revendication 8, dans lequel :
- lesdits moyens (340) destinés à transmettre l'énergie depuis le moteur (300, 330) jusqu'aux moyens (114, 124) destinés à l'entraînement de la machine de transport de charge (100) sont configurés pour la transmission d'énergie depuis le moteur secondaire (330) jusqu'aux moyens (114, 124) destinés à l'entraînement de la machine de transport de charge (100) ;
- ledit moteur secondaire (330) est un moteur hydraulique ;
- ladite machine de transport de charge (100) comprend en outre une pompe hydrostatique (320) pour la mise sous pression d'un milieu sous pression ; dans lequel ladite pompe hydrostatique (320) est conçue pour faire office de source d'énergie pour ledit moteur secondaire (330) ; et
- ledit moteur primaire (300) est configuré pour alimenter la pompe hydrostatique (320) pour la mise sous pression du milieu sous pression et ainsi pour alimenter le moteur secondaire (330) en énergie.

10. Procédé selon l'une quelconque des revendications 1 à 9, dans lequel :
- la machine de transport de charge (100) est configurée pour être conduite en dehors des routes dans une forêt ;
- le jeu d'étapes de travail possible comprend les étapes de conduite en l'absence d'une charge et de conduite avec une charge ; et le procédé comprend le fait de :
- détecter l'étape de travail de la machine de transport de charge (100) de telle manière que
• la conduite en l'absence d'une charge concerne la conduite de la machine de transport de charge (100) en l'absence d'une charge hors route dans une forêt ; et
• la conduite avec une charge concerne la conduite de la machine de transport de charge (100) avec une charge hors route dans une forêt ; et
- choisir des paramètres de commande pour le moteur primaire (300) de la machine de transport de charge (100) en utilisant l'étape de travail détectée.

11. Procédé selon l'une quelconque des revendications 1 à 10, le procédé comprenant en outre le fait de :
- détecter une exploitation de courte durée à mettre en oeuvre par la machine de transport de charge (100), l'exploitation de courte durée prenant moins de temps qu'une durée typique de ladite étape de travail détectée ;
- déterminer une valeur pour au moins un paramètre de commande du moteur primaire (300) en utilisant l'étape de travail détectée et l'exploitation détectée ;
- transmettre ladite valeur du paramètre de commande du moteur primaire (300) à l'unité de commande (310) pour le moteur primaire (300) ; et
- commander le moteur primaire au moyen de ladite valeur du paramètre de commande du moteur primaire (300).

12. Système de commande (400) pour un moteur primaire (300) approprié pour la commande du moteur primaire (300) d'une machine de transport de charge (100) qui comprend des moyens (200) pour charger la machine de transport de charge (100) et/ou des moyens (200) pour décharger la machine de transport de charge (100), le système de commande pour le moteur primaire (300)
- comprenant un ordinateur de commande (410) et des moyens (420) pour transmettre la valeur du paramètre de commande du moteur primaire (300) à l'unité de commande (310) du moteur primaire (300) ; et
- étant configuré, au moyen dudit ordinateur de commande (410) :
• pour détecter l'étape de travail de la machine de transport de charge (100) (a) sur base d'un premier mouvement de commande par le conducteur de la machine de transport de charge (100) et (b) sur base d'un deuxième mouvement de commande par le conducteur de la machine de transport de charge (100), la durée de l'étape de travail s'élevant à au moins deux minutes, et l'étape de travail étant choisie parmi un jeu d'étapes de travail possibles comprenant au moins trois étapes de travail ;
• pour déterminer une valeur pour au moins un paramètre de commande du moteur primaire (300) de la machine de transport de charge en utilisant l'étape de travail détectée ; et
• pour transmettre ladite valeur du paramètre de commande du moteur primaire (300) à l'unité de commande (310) pour le moteur primaire (300) ; dans lequel le premier mouvement de commande est utilisé pour déplacer la machine de transport de charge (100) ou une partie de cette dernière et le deuxième mouvement de commande est utilisé pour déplacer la machine de transport de charge (100) ou une partie de cette dernière, la partie à déplacer représentant au moins une partie choisie parmi les suivantes :
• une roue (114, 124) pour l'entraînement de la machine de transport de charge (100) ;
• un instrument de travail (200) de la machine de travail (100) ;
• une cabine (116) de la machine de travail (100) ; et le jeu d'étapes de travail possibles comprend les étapes dans lesquelles :
• on conduit en l'absence d'une charge ;
• on conduit avec une charge ; et
• on modifie la quantité de la charge de la machine de transport de charge (100) ;
**caractérisé en ce que** ladite machine de transport de charge (100) comprend en outre un moyen (310) pour la détection de la demande en puissance d'un moteur (300, 330), dans lequel le système de commande est en outre configuré, au moyen dudit ordinateur de commande :
- pour choisir une valeur pour un paramètre destiné à anticiper la demande en puissance dudit moteur (300) à partir d'un jeu de valeurs possibles pour le paramètre destiné à l'anticipation, ledit jeu de valeurs possibles pour le paramètre destiné à l'anticipation comprenant au moins les valeurs « sous tension » et « hors tension » ; et
- lorsque la valeur pour le paramètre destiné à l'anticipation de la demande en puissance du moteur (300, 330) est « sous tension » :
• pour choisir la demande en puissance dudit moteur (300, 330) ;
• pour comparer la demande en puissance dudit moteur (300, 330) à la puissance de sortie dudit moteur (300, 330) ;
• pour détecter un changement concernant la demande en puissance dudit moteur (300, 330) sur base de ladite comparaison ; et
• sur base du changement détecté concernant la demande en puissance, pour modifier la puissance de sortie du moteur (300, 330) pour qu'elle corresponde au changement concernant la demande en puissance ; et
- lorsque la valeur pour le paramètre destiné à l'anticipation de la demande en puissance du moteur (300, 330) est « hors tension » :
• pour ignorer les opérations destinées à la modification de la puissance de sortie du moteur (300).

13. Machine de transport de charge (100) qui
- est configurée pour être conduite sur le sol au moins hors des routes, avec et sans charge en alternance ;
- est appropriée pour répondre aux besoins de la sylviculture, de l'agriculture, de la construction et/ou des travaux de terrassement ; et
- comprend un moteur primaire (300) et une unité de commande (310) pour le moteur primaire (300), le moteur primaire (300) dans la machine de transport de charge (100) représentant un moteur à combustion ; la machine de transport de charge (100) comprenant des moyens (200) pour charger la machine de transport de charge (100) et/ou des moyens (200) pour décharger la machine de transport de charge (100) ; et
- un système de commande (400) pour le moteur primaire (300) de la machine de transport de charge (100) selon la revendication 12.

14. Porteur (100) comprenant :
- un moteur primaire (300) ;
- une unité de commande (310) pour le moteur primaire (300) ; et
- un système de commande (400) pour le moteur primaire (300) selon la revendication 12.
